# EUROPÄISCHE PATENTSCHRIFT

(11) **EP 0 680 787 B1**
(45) Veröffentlichungstag und Bekanntmachung des Hinweises auf die Patenterteilung: **30.12.1998**
(21) Anmeldenummer: 95104114.4
(22) Anmeldetag: 21.03.1995
(51) Int. Cl.: B01J 35/06, C01B 21/26

(54) **Katalysatornetze für Gasreaktionen**
Catalytic networks for gas phase reactions
Réseaux catalytiques pour réactions en phase gazeuse

(30) Priorität: 06.04.1994 DE 4411774
(43) Veröffentlichungstag der Anmeldung: 08.11.1995
(73) Patentinhaber: Degussa Aktiengesellschaft, 60311 Frankfurt (DE)
(72) Erfinder: Blass, Siegfried, D-63755 Alzenau (DE); Dübler, Horst, Dr., D-63457 Hanau (DE); Königs, Dietmar, D-63571 Gelnhausen (DE); Stoll, Thomas, D-72762 Reutlingen (DE); Voss, Harald, Prof. Dr., D-63755 Alzenau (DE)

(56) Entgegenhaltungen:
- EP-A- 0 061 304
- EP-A- 0 364 153
- EP-A- 0 504 723
- WO-A-92/02300
- WO-A-92/02301
- DE-A- 2 829 035

## Beschreibung

Die Erfindung betrifft dreidimensional gestrickte Edelmetallnetze zur Durchführung katalytischer Gasreaktionen, insbesondere zur katalytischen Oxidation von Ammoniakt mit Luft zur Salpetersäuregewinnung.

Im Reaktor sind die Netze so angeordnet, daß ihre Ebene senkrecht zur Strömungsrichtung der Reaktionsgase liegt.

Die Verwendung von Edelmetallkatalysatoren in Form von gasdurchlässigen Geweben ist ein bewährte Methode, um bestimmte katalytische Prozesse mit optimalen Ausbeuten zu betreiben. Ein bekanntes Beispiel ist der Einsatz von Platin/Rhodium-Katalysatorneten bei der Ammoniakverbrennung zur Salpetersäuregewinnung.

Aus DE-A 28 29 935 ist ein Katalysator bekannt, bei dem katalytisch aktive Metallfasern nach Art eines Nadelverbundwerkstoffes filzartig miteinander verbunden sind.

Die Katalysatornetze werden normalerweise aus dünnen Edelmetalldrähten auf Webstühlen gefertigt. Neuerdings ist aus der EP-OS 0 364 153 ein Verfahren zur Herstellung von Katalysatornetzen aus Edelmetalldrähten durch Stricken bekannt. In dieser Schrift wird auch das dreidimensionale Stricken erwähnt, doch finden sich keine näheren Angaben über die Struktur dieser Gestricke. Ein einlagig gestricktes Katalysatornetz nach dem Stand der Technik ist das Kommerzielle Produkt PLATINIT®.

Gestrickte Netze haben wie alle Katalysatornetze den Vorteil einer großen katalytischen Oberfläche, bei hoher mechanischer Festigkeit und einfacher Herstellbarkeit. Nachteilig sind jedoch die relativ hohen Edelmetallverluste während des Reaktionseinsatzes mit den damit verbundenen geringen Standzeiten der Netze. Außerdem treten an den Drahtoberflächen bei einer Anordnung der Drähte senkrecht zur Strömungsrichtung der Reaktionsgase instationäre Reaktionsabläufe auf mit entsprechenden Temperaturoszillationen, die einen nichtlinearen Reaktionsablauf bewirken und sich ungünstig auf die Produktausbeute und die Standzeit der Netze auswirken.

Es war daher Aufgabe der vorliegenden Erfindung, dreidimensionale gestrickte Edelmetallnetze zur Durchführung katalytischer Gasreaktionen zu entwickeln, insbesondere zur katalytischen Oxidation von Ammoniak mit Luft bei der Salpetersäuregewinnung, die hohe Produktausbeuten und einen stabilen Prozessablauf gewährleisten. Außerdem sollten hohe Standzeiten der Katalysatornetze bei möglichst geringen Edelmetallverlusten erzielt werden.

Diese Aufgabe wird erfindungsgemäß dadurch gelöst, daß die Netze zwei- oder mehrlagig gestrickt und die Maschen der einzelnen Lagen durch Polfäden miteinander verbunden sind, wobei bis zu zehn Polfäden pro Masche vorhanden sind und die Polfäden unter einem Winkel von 0 bis 50° zur Strömungsrichtung der Reaktionsgase angeordnet sein müssen.

Vorzugsweise verwendet man Netze, bei denen pro Masche zwei bis sechs Polfäden vorhanden sind. Vorteilhafterweise besitzen die Polfäden Längen von 1 bis 10 mm. Außerdem ist es vorteilhaft, wenn die Polfäden in ihrer Ausrichtung parallel zur Strömungsrichtung der Reaktionsgase höchstens um einen Winkel von 0 bis 30° von der Strömungsachse abweichen. Besonders günstig sind Winkel von weniger als 15°.

Solche Katalysatornetzkonfigurationen führen zu einer signifikaten Ausbeutesteigerung bei der industriellen Salpetersäureherstellung, wodurch bei der Reaktorbeschickung Edelmetall eingespart werden kann, verbunden mit einer Verringerung der Edelmetallverluste und einer Erhöhung der Katalysatornetz-Standzeiten im Reaktor. Außerdem werden überraschenderweise auch Temperaturoszillationen und lokale Überhitzungen während der Reaktion am Katalysatornetz unterdrückt.

Um solche Katalysatornetze herstellen zu können verwendet man vorzugsweise Flachstrickmaschinen mit wenigstens zwei Nadelbetten. Die Polfäden werden durch die Verbindung der Maschen des vorderen und hinteren Nadelbetts erzeugt. Polfäden können in einer Maschenreihe auch mehrfach eingelegt werden, um einen hohen Anteil solcher Fäden pro Flächeneinheit zu erhalten. Dies erhöht zusätzlich die Druckfestigkeit und Stabilität der Netze. Bei gleichem Flächengewicht besitzen diese Netze eine bessere Homogenität gegenüber in mehreren Lagen angeordnete gewebte oder gestrickte Einzelnetze.

## Patentansprüche

1. Dreidimensional gestrickte Edelmetallnetze zur Durchführung katalytischer Gasreaktionen, insbesondere zu katalytischen Oxidation von Ammoniak mit Luft bei der Salpetersäuregewinnung, wobei die Netze im Reaktor so angeordnet sind, daß ihre Ebene senkrecht zur Strömungsrichtung der Reaktionsgase liegt,
**dadurch gekennzeichnet,**
daß die Netze zwei- oder mehrlagig gestrickt und die Maschen der einzelnen Lagen durch Polfäden miteinander verbunden sind, wobei bis zu zehn Polfäden pro Masche vorhanden sind und die Polfäden unter einem Winkel von 0 bis 50° zur Strömungsrichtung der Reaktionsgase ausgerichtet sein müssen.

2. Edelmetalldnetze gemäß Anspruch 1,
**dadurch gekennzeichnet,**
daß pro Masche zwei bis sechs Polfäden vorhanden sind.

3. Edelmetallnetze nach Anspruch 1 oder 2,
**dadurch gekennzeichnet,**
daß die Polfäden eine Länge von 1 bis 10 mm besitzen.

4. Edelmetallnetze nach einem der vorhergehenden Ansprüche,
**dadurch gekennzeichnet,**
daß die Polfäden in ihrer Ausrichtung parallel zur Strömungsrichtung der Reaktionsgase höchstens um einen Winkel von 0 bis 30° von der Strömungsachse abweichen.

## Claims

1. Three-dimensional knitted noble metal gauze for performing catalytic gas reactions, in particular for the catalytic oxidation of ammonia with air and recovery of nitric acid, wherein the gauze is arranged in the reactor in such a way that its plane lies at right angles to the direction of flow of the reaction gases,
characterised in that
the gauze is knitted in two or more layers and the meshes in the individual layers are connected to each other with pile fibres, wherein up to ten pile fibres are present per mesh and the pile fibres have to be aligned at an angle of 0 to 50°C to the direction of flow of the reaction gases.

2. Noble metal gauze according to Claim 1,
characterised in that
there are two to six pile fibres per mesh.

3. Noble metal gauze according to Claim 1 or 2,
characterised in that
the pile fibres have a length of 1 to 10 mm.

4. Noble metal gauze according to one of the preceding Claims, characterised in that
the pile fibres deviate by an angle of at most 0 to 30° from the axis of flow when aligned parallel to the direction of flow of the reaction gases.

## Revendications

1. Réseaux en métal noble tricotés en trois dimensions pour l'exécution de réactions gazeuses catalytiques, en particulier pour l'oxydation catalytique de l'ammoniac avec l'air dans la production d'acide nitrique, dans lesquels les réseaux dans le réacteur sont disposés de façon que leur plan se situe perpendiculairement à la direction du courant des gaz de réaction,
caractérisés en ce que
les réseaux sont tricotés en deux ou plusieurs épaisseurs et les mailles des couches individuelles sont reliées les unes aux autres par des fils de tour pour lesquels jusqu'à 10 fils de tour par maille sont présents et les fils de tour doivent être orientés sous un angle allant de 0 à 50° par rapport à la direction du courant des gaz de réaction.

2. Réseaux en métal noble conformément à la revendication 1,
caractérisé en ce que
deux à six fils de tours par maille sont présents.

3. Réseaux en métal noble selon la revendication 1 ou 2,
caractérisés en ce que
les fils de tour possèdent une longueur allant de 1 à 10 mm.

4. Réseaux en métal noble selon l'une des revendications précédentes,
caractérisés en ce que
les fils de tour s'écartent dans leur orientation parallèlement à la direction du courant des gaz de réaction au maximum d'un angle de 0 à 30° de l'axe du courant.
